# EUROPÄISCHE PATENTSCHRIFT

(11) **EP 2 918 482 B1**
(45) Veröffentlichungstag und Bekanntmachung des Hinweises auf die Patenterteilung: **03.05.2017**
(21) Anmeldenummer: 15152588.8
(22) Anmeldetag: 27.01.2015
(51) Int. Cl.: B62D 55/18

(54) **Traktionskette für eine Raupenkette eines Kettenfahrzeugs sowie Bausatz für eine Raupenkette**
Traction chain for a track chain of a tracked vehicle and kit for a track chain
Chaîne de traction pour une chenille d'un véhicule à chenille et kit pour une chenille

(30) Priorität: 29.01.2014 DE 102014001006
(43) Veröffentlichungstag der Anmeldung: 16.09.2015
(73) Patentinhaber: Hans Hall GmbH, 88250 Weingarten (DE)
(72) Erfinder: Hall, Hans, 88250 Weingarten (DE)
(74) Vertreter: Otten, Roth, Dobler & Partner mbB Patentanwälte

(56) Entgegenhaltungen:
- DE-A1- 1 918 847
- JP-A- H02 274 682
- US-A- 3 767 275
- US-A- 5 354 124
- US-A1- 2013 147 262

## Beschreibung

Die Erfindung betrifft eine Traktionskette für eine Raupenkette eines Kettenfahrzeugs nach dem Oberbegriff des Anspruchs 1 sowie einen Bausatz für eine Raupenkette.

An Kettenfahrzeuge, die für Einsätze in empfindlichen und gegebenenfalls unter Schutz stehenden Naturräumen vorgesehen sind, wird unter anderem die Anforderung gestellt, dass Belastungen des Bodens durch ein Fahrwerk und eine damit bewegte Raupenkette begrenzt bzw. begrenzbar sind. Zu dieser Kategorie von Kettenfahrzeugen gehören insbesondere Schneefahrzeuge wie z.B. Pistenfahrzeuge und z.B. Loipenpräparationsfahrzeuge. Durch eine Auslegung gemäß solcher Gelände schonender Anforderung sind derartige Kettenfahrzeuge auch für den Einsatz in einem Gelände mit nachgiebigem Untergrund, beispielsweise in Biotopen wie Moorlandschaften, geeignet. Wenn der Untergrund kaum oder gar nicht mit Schnee und Eis bedeckt ist, kann ein Kettenfahrzeug wie z.B. eine Pistenraupe mit einer bekannten Sommerkette ausgestattet werden, die insbesondere an schnee- und eisfreien Untergrund angepasst ist.

Raupenketten für solche Kettenfahrzeuge sind derart aufgebaut, dass sie gegenüber Fahrketten für Schwerfahrzeuge, wie z.B. schwere Baumaschinen und z.B. Militärfahrzeuge, mit einem relativ geringen Eigengewicht zu einem Gesamtgewicht des Kettenfahrzeugs beitragen. Des Weiteren ist neben einer Länge des Fahrwerks des Kettenfahrzeugs auch eine Breite der Raupenkette üblicherweise so ausgelegt, dass eine Gewichtskraft des gesamten Kettenfahrzeugs auf eine vergleichsweise große Traktionsfläche verteilt ist, um einen begrenzten Druck auf einen Untergrund auszuüben.

Eine bekannte Möglichkeit zur Vergrößerung der Auflagefläche besteht darin, eine Raupenkette aus einer Traktionskette und einer oder mehreren Seitenketten zusammenzusetzen, wobei die Traktionskette und die Seitenketten über Raupenstege miteinander verbunden sind. Die Traktionskette ist dabei zur Übertragung der Vortriebskraft von einem Antriebsrad auf die Raupenkette vorgesehen, weshalb die Traktionskette an einer zum Fahrwerk hingewandten Innenseite ein durch Spurführungselemente vorgegebene Spur zur Führung des Fahrwerks des Kettenfahrzeugs aufweist. Wegen des vergleichsweise geringen Gewichts von zum Beispiel Schneefahrzeugen lässt sich die Traktionskette für ein Pistenfahrzeug beispielsweise aus einem elastischen, insbesondere elastomeren Grundmaterial hergestellen. Für eine Übertragung von Beschleunigungs- und Bremskräften eines Antriebsrads auf das Fahrwerk, insbesondere die Raupenkette kann in die Traktionskette, z.B. in das elastomere Material der Grundkette ein insbesondere über mehrere Kettenglieder durchgehend ausgebildetes Zugmittel eingebettet sein. Das Zugmittel kann zum Beispiel ein Gewebeband aus Kunststofffasern und zum Beispiel ein Stahlseil sein.

Eine Traktionskette für eine Raupenkette eines Kettenfahrzeugs gemäß dem Oberbegriff des Anspruchs 1 ist aus der JP H02 274682 A bekannt. Aufgrund einer Abstimmung auf vorgegebene Einsatzbedingungen sowie auf ein vorgegebenes Fahrzeug sind bekannte Raupenketten und insbesondere die Traktionsketten begrenzt einsetzbar. Der vorliegenden Erfindung liegt die Aufgabe zugrunde, eine Raupenkette und insbesondere eine Traktionskette bereitzustellen, die vergleichsweise vielfältig einsetzbar ist.

Diese Aufgabe wird durch eine Traktionskette mit den Merkmalen des Anspruchs 1 sowie durch einen Bausatz für eine Raupenkette mit einer erfindungsgemäßen Traktionskette gelöst.

Bevorzugte und vorteilhafte Ausführungen der Erfindung sind in den abhängigen Ansprüchen angegeben.

Die Erfindung geht von einer Traktionskette für eine Raupenkette eines Kettenfahrzeugs, insbesondere eines Pistenfahrzeugs und/oder eines Loipenpräparationsfahrzeugs, aus. Die Traktionskette ist mit Eingriffen für ein Antriebsrad, mit Spurführungselementen, die zur Führung eines Fahrwerks des Kettenfahrzeugs in einer Laufrichtung der Traktionskette verlaufenden Spur an einer Innenseite der Traktionskette vorgesehen, mit einer Vielzahl von Anbringeinrichtungen ausgestattet, von denen jede zur Anbringung eines Raupenstegs an einer Außenseite der Traktionskette und quer zur Laufrichtung der Traktionskette vorgesehen sind, wobei die Traktionskette zur Verwendung mit einer parallel mitlaufenden Seitenkette vorgesehen ist. Die Traktionskette ist dabei teilweise aus einem elastischen, insbesondere elastomeren Grundmaterial geformt, in das wenigstens ein Zugmittel in eine Laufrichtung der Traktionskette verlaufend eingebettet ist.

Der Kern der Erfindung besteht darin, dass das Zugmittel innerhalb eines Bereichs des elastischen Grundmaterials eingebettet ist, in dessen Umgebung das Grundmaterial zwischen der Innenseite und der Außenseite der Traktionskette eine Dicke von wenigstens 10 mm aufweist, dass die Anbringeinrichtung im elastischen Grundmaterial der Traktionskette eingebettet ist, und dass jede Anbringeinrichtung ein quer zur Laufrichtung verlaufendes, im Querschnitt hintergreifendes oder U-förmig nach außen offenes im Wesentlichen durchgehendes Aufnahmeprofil aufweist, in das jeweils einer der Raupenstege für eine Anbringung z.B. quer zur Laufrichtung der Traktionskette insbesondere seitlich einschiebbar ist, wobei der Raupensteg an der Anbringeinrichtung in wenigstens einer eingeschobenen Position fixierbar ist. Durch die Anbringeinrichtungen mit dem Aufnahmeprofil das für eine Anbringung der Raupenstege durch seitliches Einschieben ausgebildet ist, bietet die Traktionskette eine vorteilhaft einfache Grundstruktur, die durch formschlüssige Aufnahme der Raupenstege vergleichsweise günstige Fahreigenschaften bietet. Durch die im elastischen Grundmaterial der Traktionskette eingebetteten Einbringeinrichtungen lassen sich Vortriebskräfte eines Antriebsrads vorteilhaft gleichmäßig von einer Traktionskette auf einen Raupensteg übertragen. Eine Dicke von wenigstens 10 mm zwischen der Innen- und der Außenseite der Traktionskette bietet dabei vorteilhaft die Möglichkeit, das Zugmittel in einem durch Verformung zum Beispiel bei Umlenkung der Kette vergleichsweise unbelasteten Bereich anzuordnen. Die Traktionskette kann dadurch haltbarer aufgebaut sein, wobei ein Verschleiß durch Biegebeanspruchungen und gegebenenfalls Ablösung des elastischen Grundmaterials vom darin eingebetteten Zugmittel vermeidbar ist.

Eine bevorzugte Ausführung der Erfindung besteht darin, dass das elastische Grundmaterial in Laufrichtung als durchgehendes Band ausgebildet ist. Dadurch kann ein eingebettetes Zugmittel, zum Beispiel ein Stahlseil, über eine gesamte Länge einer Traktionskette in Laufrichtung bzw. entlang eines gesamten Umlaufs einer zum Beispiel endlosen Traktionskette in Laufrichtung vollständig vom elastischen Grundmaterial umschlossen und vorteilhaft z.B. vor Feuchtigkeit geschützt sein.

Die Spurführungselemente können im elastischen Grundmaterial eingebettet sein. Für eine rationelle Herstellung sind die Spurführungselemente vorzugsweise im elastischen Grundmaterial an der Innenseite der Traktionskette angeformt. In beiden Fällen kann das elastische Grundmaterial vorteilhaft Führungskräfte, die vom Fahrwerk auf die Traktionskette wirken, elastisch abfedern und dämpfen. Die Spurführungselemente können dabei mit einem vom elastischen Grundmaterial verschiedenen Material an der Innenseite der Traktionskette angegossen sein.

Vorzugsweise umfasst die Anbringeinrichtung ein in die Traktionskette eingebettetes Schienenelement mit U-Form, dessen Material härter als das elastische Grundmaterial ist, Dabei kann das Schienenelement zum Beispiel aus Metall bzw. aus einem vergleichsweise widerstandsfähigen Kunststoff hergestellt sein. Das Schienenelement kann zum Beispiel durch Eingießen oder zum Beispiel durch Einvulkanisieren in das elastische Grundmaterial eingebettet sein. Dadurch ist eine passgenaue auf einen Querschnitt des Raupenstegs abgestimmte Ausbildung des U-förmigen quer zum offenen Aufnahmeprofil vorteilhaft erleichtert.

Insbesondere ist es bevorzugt, dass mehrere innere Flächenabschnitte des Aufnahmeprofils einen Querschnitt bilden, durch den eine Anbringung eines der Raupenstege nur durch ein seitliches Einschieben des Raupenstegs möglich ist. Beispielsweise können ein erster und ein zweiter Seitenschenkel des U-förmigen Aufnahmeprofils zu einer U-Profil-Öffnung hin zumindest abschnittsweise zusammenlaufen bzw. einander annähern, um mit einer dadurch entstehenden Verengung einen Raupensteg an der Außenseite der Traktionskette in Laufrichtung zu fixieren.

Das Aufnahmeprofil kann in einer Breite der Traktionskette quer zur Laufrichtung über einen Teilabschnitt der Traktionskette erstreckt sein.

Dabei kann das Aufnahmeprofil zur Anbringung eines stiftförmigen Fixierelements parallel zur Laufrichtung ausgebildet sein, wobei mit dem Fixierelement ein am Aufnahmeprofil eingeschobener Raupensteg gegen eine Verschiebung quer zur Laufrichtung fixierbar ist.

Eine bevorzugte Ausführung der Erfindung besteht darin, dass das Aufnahmeprofil mehrere Anbringpositionen für das stiftförmige Fixierelement aufweist. Dies bietet den Vorteil, dass ein Raupensteg je nach Einsatzsituation in verschiedenen Positionen quer zur Laufrichtung fixiert werden kann.

Vorzugsweise ist an der Traktionskette in Laufrichtung auf jeden der Eingriffe folgend ein Kettensteg ausgebildet, der eines der Aufnahmeprofile aufweist. Dadurch kann ein Kettensteg vorteilhaft im Bereich zwischen zwei Eingriffen mittels der Anbringeinrichtung verstärkt sein. Die Raupenstege sind vorzugsweise als Trittelemente und gegebenenfalls als Bodeneingriffselemente der Traktionskette ausgebildet.

Die Eingriffe an der Traktionskette können zum Beispiel als Materialdurchbrüche ausgebildet sein, um eine Ansammlung von Untergrundmaterial im Fahrwerk zu vermeiden.

Vorzugsweise sind in der Traktionskette mehrere Zugmittel eingebettet, um Zugkräfte in einer Breite der Traktionskette zu verteilen. Das Zugmittel kann insbesondere neben einem Spurabschnitt der Traktionskette angeordnet sein, um eine relativ gerade Anordnung der Zugmittel in Laufrichtung der Traktionskette zu ermöglichen. Dadurch lässt sich ein Verschleiß durch Querkräfte innerhalb der Kette verringern oder gar vermeiden.

Eine bevorzugte Ausführung der Erfindung besteht darin, dass die Anbringeinrichtungen jeweils einen Stützabschnitt aufweisen, der zwischen den Zugmitteln und der Oberfläche der Traktionskette an deren Innenseite angeordnet ist.

Dabei kann an der Anbringeinrichtung der Stützabschnitt über das Aufnahmeprofil seitlich hervorstehend ausgebildet sein. Mit dem Stützabschnitt lässt sich vorteilhaft vermeiden, dass die Zugmittel und die Anbringeinrichtung derart in entgegengesetzte Richtungen auslenkbar sind, dass schädliche Spannungen im elastischen Grundmaterial der Traktionskette auftreten. Um konzentrierte Krafteinwirkungen innerhalb der Traktionskette auf das elastische Grundmaterial zu vermeiden, sind Außenkanten am Stützabschnitt vorzugsweise abgerundet, insbesondere die Außenkanten, die an einer den Zugmitteln zugewandten Seite liegen und die quer zur Laufrichtung verlaufen.

Solche schädlichen Krafteinwirkungen lassen sich noch besser vermeiden, wenn ein Stützabschnitt an einer den Zugmitteln zugewandten Seite konvex vorgewölbt ist. Die Traktionskette kann grundsätzlich eine geschlossen umlaufende Kette sein. Um die Traktionskette gegebenenfalls an verschiedenen Fahrzeugen einsetzen zu können, ist die Traktionskette entlang der Laufrichtung vorzugsweise aus mehreren miteinander verbundenen Traktionskettensegmenten zusammengesetzt.

Als Weiterbildung der erfindungsgemäßen Traktionskette wird ein Bausatz zum Aufbau einer Raupenkette für ein Pistenfahrzeug vorgeschlagen, der eine erfindungsgemäße Traktionskette gemäß ein oder mehreren der vorgenannten Ausführungen umfasst.

Der Bausatz umfasst vorzugsweise mehrere Traktionskettensegmente, die untereinander unterschiedliche Länge bezüglich der Laufrichtung aufweisen. Dadurch sind mehrere Traktionskettensegmente beispielsweise derart kombinierbar, dass eine daraus zusammengesetzte Traktionskette zu einem vorgegebenen Fahrzeug, insbesondere zu dessen Fahrwerk passt.

Vorzugsweise umfasst der Bausatz mehrere Seitenkettensegmente, die in Laufrichtung unterschiedliche Längen aufweisen. Dadurch lassen sich auch die Seitenkettensegmente an entsprechende Dimensionen eines Fahrwerks anpassen. Die Seitenkette, insbesondere die Seitenkettensegmente, können für eine vergleichsweise einfache Anbringung zum Beispiel durch Verschrauben und zum Beispiel durch Anklemmen an einem Raupensteg ausgebildet sein. Für eine vergleichsweise genaue Mitführung der Seitenkette können an der Seitekette bzw. einem Seitenkettensegment U-förmige Anbringeinrichtungen ausgebildet sein.

Nachfolgend wird die Erfindung anhand von Ausführungsbeispielen erläutert und mit Hilfe von nicht maßstabsgetreuen Zeichnungen beschrieben. Es zeigen:
- Figur 1: eine schematische Aufsicht auf eine Innenseite einer Raupenkette mit einer erfindungsgemäßen Traktionskette,
- Figur 2: eine schematische Seitenansicht der Raupenkette,
- Figur 3: eine schematische Draufsicht auf einen Abschnitt einer erfindungsgemäßen Traktionskette,
- Figur 4: eine eine schematischen Untenansicht der Traktionskette,
- Figur 5: eine schematische Seitenansicht der Traktionskette,
- Figur 6: eine schematische perspektivische Ansicht eines Ausschnitts der Traktionskette,
- Figur 7: eine schematische Seitenansicht des Ausschnitts entlang einer Laufrichtung der Traktionskette,
- Figur 8a: eine schematische Seitenansicht des Ausschnitts der Raupenkette,
- Figur 8b: eine schematische Seitenansicht eines Schnitts durch Ausschnitt der Traktionskette,
- Figur 9: eine schematische Seitenansicht des Ausschnitts der Traktionskette,
- Figur 10: eine schematische Seitenansicht eines Stegkerns der Traktionskette,
- Figur 11: eine schematische perspektivische Ansicht des Stegkerns der Traktionskette,
- Figur 12: eine schematische Seitenansicht des Stegkerns in einer Laufrichtung der Traktionskette,
- Figur 13: schematische perspektivische und seitliche Ansichten eines Stegkerns und eines Raupenstegs einer erfindungsgemäßen Traktionskette,
- Figur 14: schematische perspektivische und seitliche Ansichten eines Stegkerns und eines Raupenstegs einer erfindungsgemäßen Traktionskette,
- Figur 15: eine schematische Aufsicht und Seitenansicht einer erfindungsgemäßen Traktionskette,
- Figur 16: ein Ausschnitt aus der schematischen Seitenansicht in Figur 15.

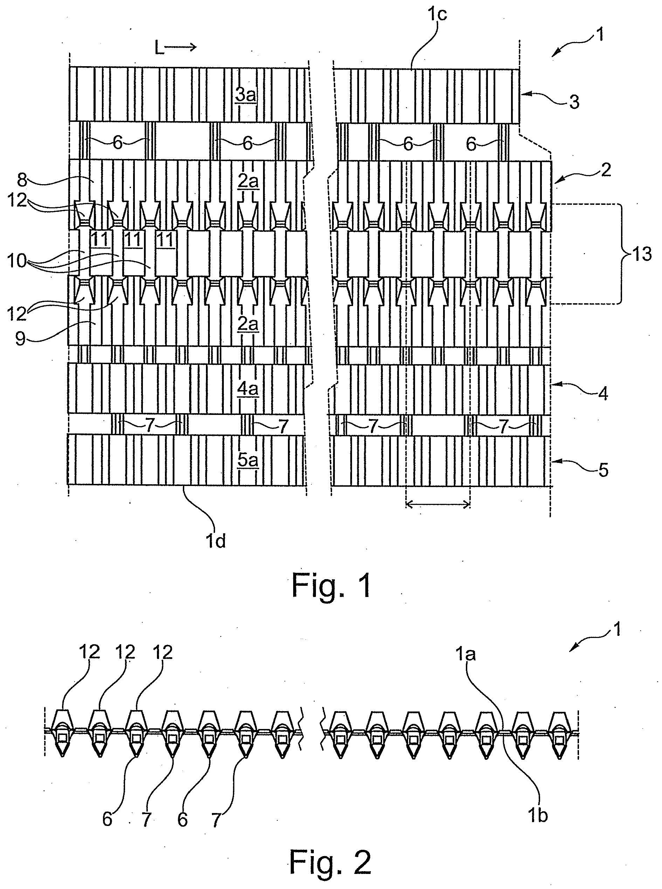

In Figur 1 ist ein Ausführungsbeispiel einer Raupenkette 1 für ein Schnee- bzw. Pistenfahrzeug (nicht gezeigt) mit einer erfindungsgemäßen Traktionskette 2 ausschnittsweise gezeigt. Die Traktionskette 2 ist durch eine Vielzahl von Raupenstegen 6 mit Seitenketten 3 und 4 verbunden. Eine Vielzahl von Raupenstegen 7 verbindet die Seitenketten 5 mit der Traktionskette 2 und mit der Seitenkette 4. Jeder der Raupenstege 6 erstreckt sich dabei vorzugsweise durchgehend von der Seitenkette 4 bis z.B. zu einer Stirnseite 1c der Seitenkette 3. Ebenso kann sich jeder der Raupenstege 7 über z.B. eine ganze Breite von der Traktionskette 2 bis z.B. zu einer Stirnseite 1d erstrecken. Die Raupenstege 6 und 7 folgen in z.B. einander abwechselnder Reihenfolge aufeinander. Dabei können die Raupenstege 6 und 7 insbesondere gleich lang sein und können zueinander derart versetzt angeordnet sein, dass die Raupenstege 6 an der Traktionskette 2 seitlich herausragen und die Raupenstege 7 an der Seitekette 4 seitlich hervorstehen.

Die Seitenketten 3, 4, und 5 sind parallel zur Traktionskette 2 angeordnet. Die Traktionskette 2 und die Seitenketten 3, 4, und 5 sind voneinander beabstandet, um eine Ansammlung von Untergrundmaterial wie z.B. Schnee innerhalb der beim Fahren umlaufenden Raupenkette 1 zu verringern bzw. zu vermeiden.

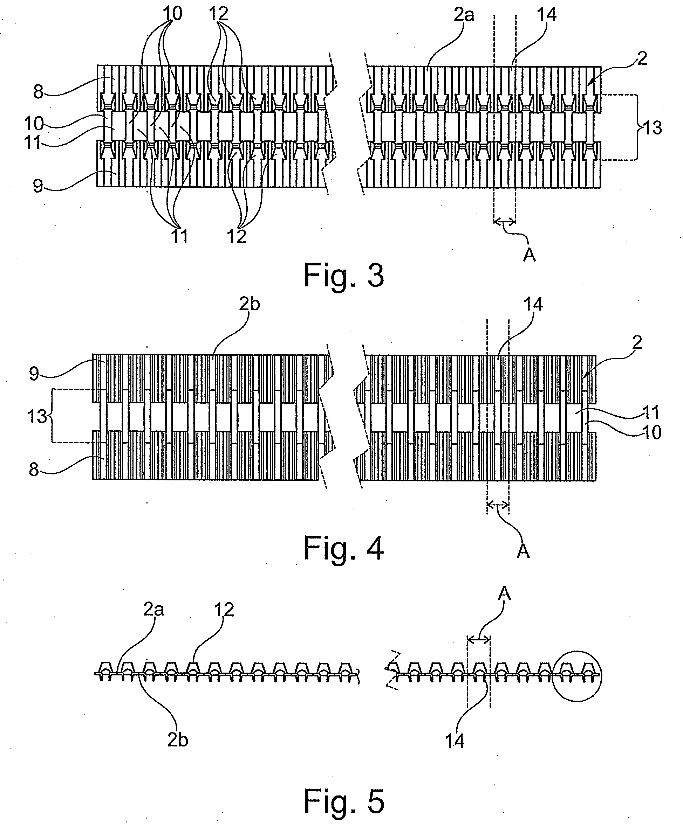

In den Figuren 3, 4 und 5 ist die erfindungsgemäße Traktionskette 2 einzeln in verschiedenen Ansichten gezeigt. Die Traktionskette 2 weist eine Vielzahl Kettenstegen 10 auf, die quer, insbesondere senkrecht, zu einer Laufrichtung L verlaufen und mit denen zwei Kettengurte 8 und 9 der Traktionskette 2 in regelmäßigen Abständen A miteinander verbunden sind. Zwischenräume 11, die zwischen jeweils zwei benachbarten Kettenstegen 10 liegen, sind als Eingriffe für Zähne (nicht gezeigt) eines z.B. Antriebsrades (nicht gezeigt) vorgesehen.

Die Traktionskette 2 ist für einen unmittelbaren Kontakt und ein fortbewegendes Zusammenwirken mit einem Fahrwerk (nicht gezeigt) eines Pistenfahrzeugs (nicht gezeigt) vorgesehen, an dem die Raupenkette 1 umlaufend angebracht ist. Die Laufrichtung L ist daher durch die Traktionskette 2 vorgegeben. Vorzugsweise ist der Abstand A auf eine Teilung von eingreifenden Zähnen (nicht gezeigt) eines Antriebsrades (nicht gezeigt) abgestimmt. Das Fahrwerk (nicht gezeigt) des Fahrzeugs (nicht gezeigt) steht dabei mit einer Innenseite 2a der Traktionskette 2 in Berührung, wobei die Traktionskette 2 mit einer Außenseite auf einem Untergrund aufliegt und das Fahrwerk auf der Innenseite der Traktionskette aufgestellt ist.

An einer Innenseite 2a der Traktionskette 2 sind an den Kettengurten 8 und 9 höckerförmige Erhebungen 12 ausgebildet, um Fahrwerksteile (nicht gezeigt) wie z.B. Rollen, z.B. Kufen und z.B. ein Antriebsrad eines Kettenfahrzeugs (nicht gezeigt) in einem Spurbereich 13 der Traktionskette 2 führen zu können. Die Erhebungen 12 können den Spurbereich 13 z.B. seitlich quer zur Laufrichtung L begrenzen, um Querkräfte z.B. bei einer Kurvenfahrt und insbesondere bei einer Fahrt an einem quer zur Fahrtrichtung abschüssigen Hang aufzunehmen.

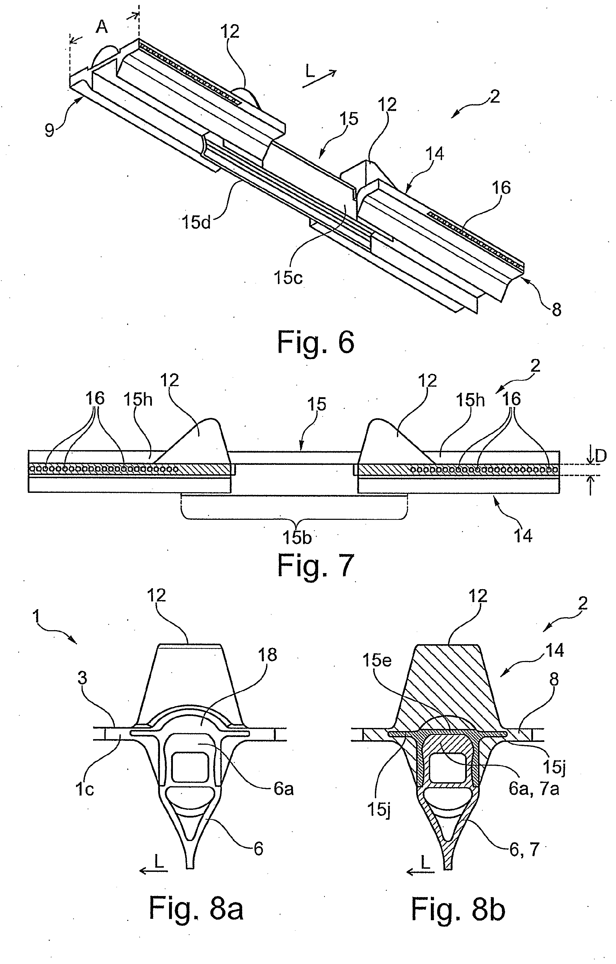

In den Figuren 3 bis 5 ist ein Ausschnitt 14 der Länge A der Traktionskette 2 markiert, der in den Figuren 6, 7, 8b und 9 mit weiteren Einzelheiten gezeigt ist. Die Traktionskette 2 ist aus aufeinanderfolgenden Abschnitten, die dem Ausschnitt 14 gleichen, periodisch ausgebildet, weshalb der Ausschnitt 14 als Kettenglied der Traktionskette 2 erachtet werden kann.

Die Kettengurte 8 und 9 sind zu einem Großteil aus einem elastischen, insbesondere elastomeren Grundmaterial, wie z.B. einer Gummimischung, hergestellt. Dabei können die Kettengurte 8 und 9 gegebenenfalls zusammen hergestellt werden, damit z.B. die Kettengurte 8 und 9 im Bereich der Kettenstege 10 durch das Grundmaterial miteinander verbunden sind. Im Bereich der Kettengurte 8 und 9 ist zwischen der Innenseite 2a und einer Außenseite 2b ein Abstand D ausgebildet, der bereichsweise vollständig vom Grundmaterial der Traktionskette 2 ausgefüllt ist. Des weiteren sind in jeden der Kettengurte 8 und 9 Zugmittel eingegossen. Die Zugmittel können z.B. ein Stahlseil 16 und vorzugsweise mehrere Stahlseile 16 umfassen. Dadurch ist vorteilhaft eine Belastbarkeit der Kettengurte 8, 9 in Laufrichtung insbesondere zur Übertragung von Antriebskräften erhöht. Um eine Ablösung des elastomeren Grundmaterials der Kettengurte 8, 9 von den Stahlseilen zu verhindern, sind die Stahlseile 16 vorzugsweise vollständig vom Grundmaterial umschlossen und in einer mittleren Position, insbesondere im Bereich einer neutralen Faser bezüglich Biegebeanspruchungen zwischen der Innenseite 2a und der Außenseite 2b der Traktionskette 2 angeordnet.

Im Bereich der Kettenstege 10 ist jeweils ein Stegkern 15 in die Traktionskette 2, insbesondere in die beiden Kettengurte 8 und 9 z.B. durch Eingießen oder Angießen oder z.B. durch Vulkanisieren eingebettet. Dabei ist vorzugsweise eine haftende Verbindung zwischen dem Grundmaterial und einem Kernmaterial des Stegkerns 15 ausgebildet. Die Oberfläche der Stegkerne 15 kann z.B. aufgerauht sein, um bei einem z.B. Eingießen des Stegkerns 15 in das Grundmaterial eine vergrößerte Haftfläche bereitzustellen.

Das Kernmaterial der Stegkerne 15 ist vorzugsweise härter als das Grundmaterial und kann aus z.B. einem Kunststoff und insbesondere aus einem Metall bestehen. Vorzugsweise sind die Stegkerne 15 jeweils als Gussteile durchgehend in einem Stück aus einem Leichtmetall hergestellt, um bei geringem Gewicht eine vergleichsweise hohe Festigkeit aufzuweisen. Der vergleichsweise harte Stegkern 15 ermöglicht Zugkräfte eines Antriebsrads (nicht gezeigt) und Gewichtskräfte des z.B. Pistenfahrzeugs (nicht gezeigt) auf die Traktionskette 2 zu übertragen und auf beide Kettengurte 8 und 9 zu verteilen. Hierfür kann der Stegkern 15 von einem Mittelabschnitt 15b beidseitig in Längsrichtung fortgesetzte Stützabschnitte 15h aufweisen (Fig. 6, 7).

An einem innenseitigen Oberflächenabschnitt 15a kann der Stegkern 15 z.B. halbkreisförmig ausgewölbt sein, wodurch der Stegkern 15 an eine Form eines Zwischenraums (nicht gezeigt) zwischen zwei aufeinanderfolgenden Zähnen (nicht gezeigt) eines Antriebsrades (nicht gezeigt) angepasst sein kann, um dem Antriebsrad einen passgenauen Halt an der Traktionskette 2 zu bieten. Vorzugsweise ist der Stegkern 15 so tief in das Grundmaterial der Traktionskette 2, insbesondere in die Kettengurte 8 und 9 eingebettet, dass an der Innenseite 2a - zumindest abseits der Zwischenräume 11 - nur der gewölbte Oberflächenabschnitt 15a aus dem Grundmaterial herausragt.

Vorzugsweise reicht der Stegkern 15 quer zur Laufrichtung in die höckerförmigen Erhebungen 12 der Kettengurte 8 und 9 hinein (Fig. 7) und ist vorzugsweise über eine gesamte quer zur Laufrichtung liegende Breite beider Kettengurte 8 und 9 sowie den Zwischenraum 11 erstreckt.

Am Mittelabschnitt 15b sind parallel zu einer Längsachse des Stegkerns 15 zwei wandartige Schenkelabschnitte 15c und 15d ausgebildet, die vom Stegabschnitt 15 zwischen den Kettengurten 8, 9 und teilweise innerhalb der Kettengurte 8, 9 an der Außenseite 2b der Traktionskette 2 hervorragen.

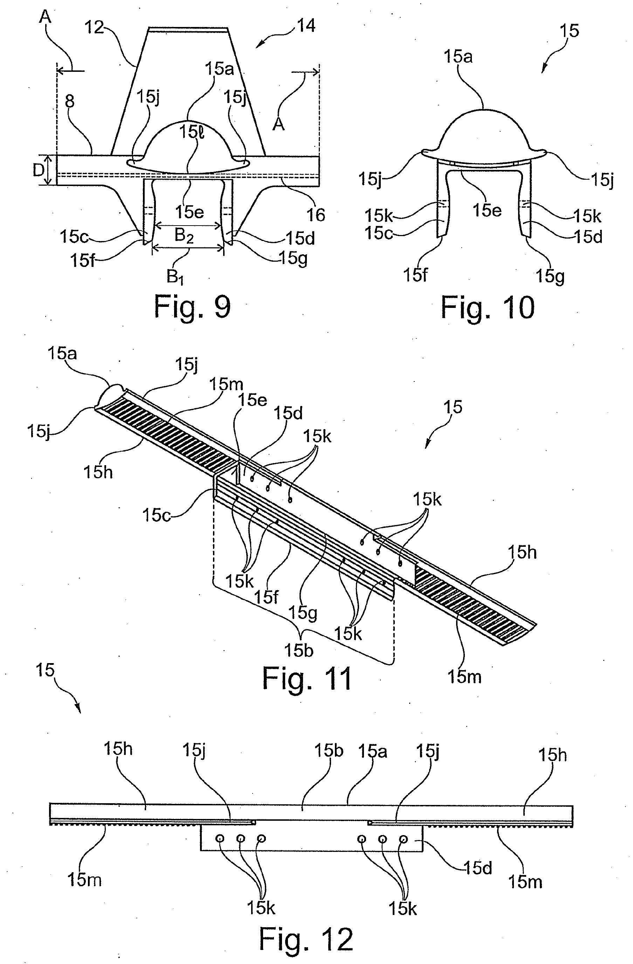

Wie in Fig. 9 gezeigt, sind die Schenkelabschnitte 15c und 15d z.B. zueinander parallel in einem Abstand von einer Breite B₁ des Stegkerns 15 angeordnet. Der aus Fig. 9 entnehmbare Stegkern 15 ist in den Figuren 10, 11 und 12 als Einzelteil gezeigt. Die Schenkelabschnitte 15c und 15d sind vorzugsweise durchgehend am übrigen Stegkern 15 angeformt und bilden mit einem Brückenabschnitt 15e des Stegkerns 15 ein U-förmiges, quer zur Laufrichtung der Traktionskette 2 verlaufendes Profil, in das eine Profilschiene 6a, 7a jeweils eines der Raupenstege 6 bzw. 7 seitlich einschiebbar ist (Fig. 8b). Mit dem Brückenabschnitt 15e kann z.B. ein Teil einer senkrecht wirkenden Gewichtskraft auf einen Raupensteg 6 oder 7 übertragen werden, wobei die Kraft vorteilhaft über eine Breite B₁ auf den Brückenabschnitt 15e verteilt übertragbar ist. In entsprechender Weise sind mit den Schenkelabschnitten 15c und 15d Antriebskräfte, die in Laufrichtung der Traktionskette 2 wirken, auf einen Raupensteg 6 bzw 7 übertragbar.

Zwischen dem Brückenabschnitt 15e und einer Endkante 15f bzw. 15g ragen die Schenkelabschnitte 15c und 15d in einen freien Zwischenraum hinein, in dem die Schenkelabschnitte 15c und 15c in einem Abstand B₂ voneinander entfernt liegen. Der Abstand B₂ ist kleiner als der Abstand B₁ im Bereich des Brückenabschnitts 15e, wodurch zwischen dem Brückenabschnitt 15e und der Öffnung zwischen den Endkanten 15f und 15g eine Verengung ausgebildet ist. Vorzugsweise ist die Verengung an einen Schienenprofilabschnitt 6a der Raupenstege 6 bzw. 7 derart angepasst, dass ein Raupensteg 6 bzw. 7 durch formschlüssiges Ineinandergreifen am Stegkern 15 in Richtungen senkrecht zur Längsrichtung des Stegkerns 15 festgehalten ist. Der Stegkern 15 ist dadurch für ein Hintergreifen am Raupensteg 6 bzw. 7 ausgebildet. Hierdurch sind insbesondere Anbringmittel vermeidbar, die durch den Stegkern senkrecht zu einer Ebene hindurchführen, die in den Kettengurten 8 bzw. 9 liegt. Der Stegkern 15 weist daher eine relativ hohe Festigkeit auf.

Für eine Fixierung parallel zur Längsrichtung des Stegkerns 15 und insbesondere zur Längsrichtung des von den Abschnitten 15c, 15d und 15e gebildeten Schienenprofils können die Schenkelabschnitte 15c und 15d z.B. Bohrungen 15k (Fig. 10, 11, 12) aufweisen, an denen sich ein Raupensteg 6 bzw. 7 beispielsweise mit einer Schraube (nicht gezeigt) oder einem stiftförmigen, durchsteckbaren Verriegelungselement (nicht gezeigt) bezüglich einer Einschieberichtung am Kernsteg 15 arretieren lässt.

Der gewölbte Oberflächenabschnitt 15a kann über den Mittelabschnitt 15b und beide Stützabschnitte 15h erstreckt sein. Dabei kann der Stegkern 15 als teilweise in die Kettengurte 8 und 9 eingebetteter Stab ausgebildet sein, der z.B. Gewichtskräfte auf beide Kettengurte 8, 9 über deren insbesondere gesamte Breite verteilt. Die Zugmittel, insbesondere die Stahlseile 16, sind vorzugsweise zwischen den Stegkernen 15 und der Außenseite 2b der Traktionskette 2 angeordnet.

Dem Oberflächenabschnitt 15a entgegengesetzte Oberflächenabschnitte 151 können an den Stützabschnitte 15h ebenfalls eine konvexe Wölbung aufweisen, wodurch an Außenkanten der Stützabschnitte vergleichsweise mehr elastisches Grundmaterial zwischen z.B. den Stahlseilen 16 und den Stützabschnitten 15h angeordnet ist als in einem zentralen Bereich unterhalb der Stützabschnitte 15h. Dadurch lässt sich ein Knicken oder ein Bruch an einem der Stahlseile 16 durch konzentrierte Krafteinleitung vermeiden. Um konzentrierten Krafteinleitungen vom Stegkern 15 auf die Kettengurte 8, 9 zusätzlich entgegenzuwirken, können an den Stützabschnitten 15h und auch am Mittelabschnitt 15b - z.B. abseits der Zwischenräume 11 - Vorsprünge 15j ausgebildet sein, durch die eine Kraft übertragende Oberfläche insbesondere an einer Unterseite der Stützabschnitte 15h vergrößert ist. Des Weiteren sind an Unterseiten der Stützabschnitte 15h Rillenstrukturen 15m ausgebildet, die in Laufrichtung der Traktionskette 2 verlaufen. Mit den Rillenstrukturen lassen sich Torsions- und Scherkräfte verringern, die bei einem Auftreten von Querkräften vom Stegkern 15 auf ein als Zugmittel eingebettetes z.B. Stahlseil 16 übertragen werden.

An der in Fig. 8a gezeigten Stirnseite 1c der Raupenkette 1, insbesondere der Seitenkette 3 ist erkennbar, dass z.B. in der Seitenkette 3 ein Aufnahmekern 18 ausgebildet sein kann, in den sich ein Raupensteg 6 zur Anbringung seitlich einschieben lässt. Der Aufnahmekern 18 kann in ähnlicher Weise wie ein Stegkern 15 an den Kettengurten 8, 9 in ein Grundmaterial der Seitenkette 3 eingebettet und insbesondere darin eingegossen sein.

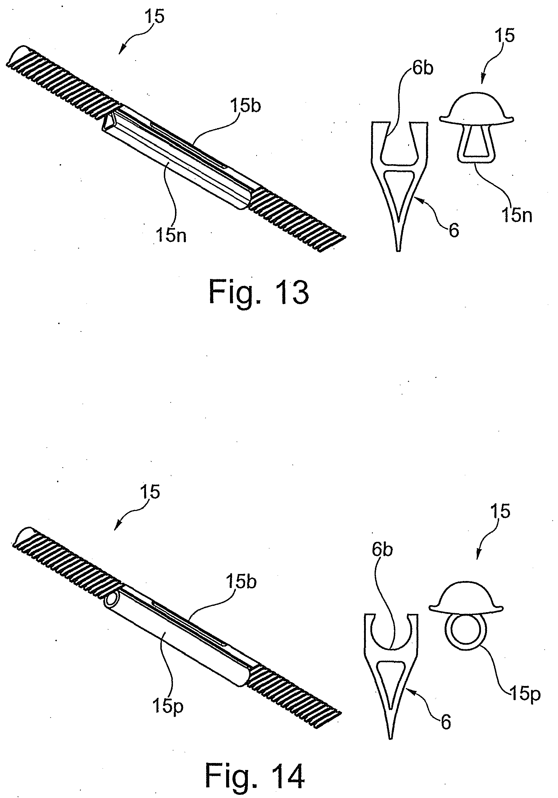

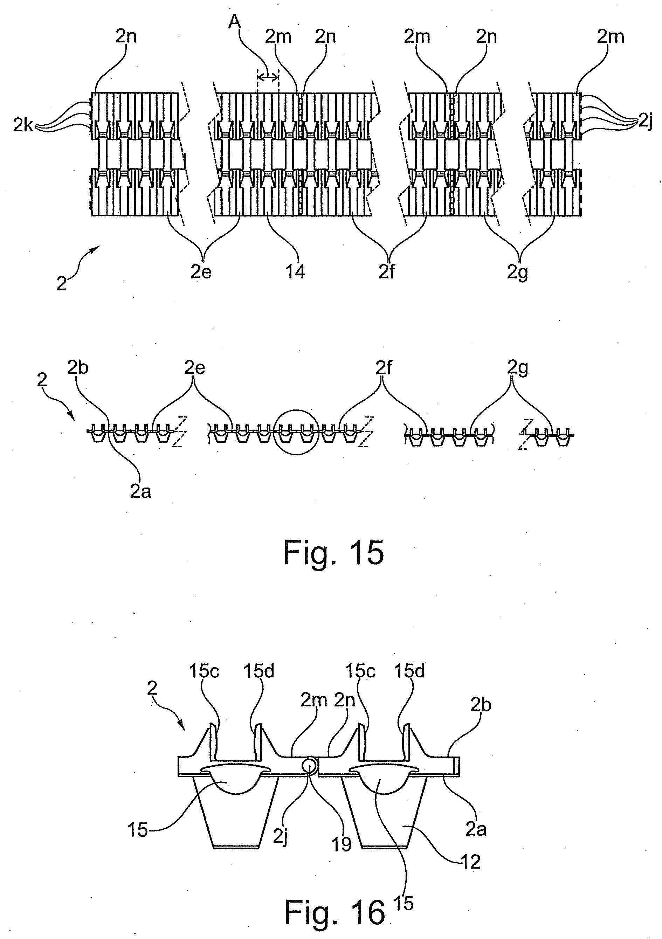

Für eine einschiebbare, hintergreifende Anbringung können Querschnittsprofile in verschiedenen Formen ausgebildet und an einem Kernsteg 15 und an einem Raupensteg 6 aufeinander abgestimmt sein. Als weiteres Ausführungsbeispiel ist in Figur 13 ein Stegkern 15 für eine erfindungsgemäße Traktionskette 2 gezeigt, an dessen Mittelabschnitt 15b ein schienenförmiger Profilabschnitt 15n mit einem trapezförmigen Querschnitt ausgebildet ist, wobei der Querschnitt des inneren Freiraums an einer kurzen Parallelseite zur Außenseite 2b hin offen ist. Der Raupensteg 6 ist mit einem schienenförmigen Hohlprofil 6b versehen, das einen nach oben offenen, sich verengenden Querschnitt aufweist. Dabei sind der Stegkern 15 und der Raupensteg 6 derart aneinander angepasst, dass das Hohlprofil 6b des Raupenstegs 6 in einer eingeschobenen Position den Profilabschnitt 15n vorzugsweise spielfrei umgreifen und hintergreifen kann. Der trapezförmige Querschnitt der ineinandergreifenden Profile vom Stegkern 15 und vom Raupensteg 6 lässt dabei keine Drehbewegung um eine Längsachse des Stegkerns zu. Kleine Dreh- bzw. Schwenkbewegungen eines Raupenstegs 6 sind z.B. mit einer Ausführung gemäß Figur 14 möglich, bei der ein Stegkern 15 einen schienenförmigen Profilabschnitt 15p mit einem kreisringförmigen Querschnitt aufweist. Ein Raupensteg 6 ist mit einem einseitig offenen kreisringförmigen Hohlprofil 6c an den Profilabschnitt 15p für eine formschlüssige Anbringung durch Einschieben angepasst. Um eine erfindungsgemäße Traktionskette 2 an unterschiedliche Fahrwerksabmessungen anpassbar auszubilden, kann die Traktionskette 2 aus mehreren, insbesondere in Laufrichtung unterschiedlich langen Kettensegmenten 2e, 2f und 2g zusammengesetzt sein (Fig. 15). Die Kettensegmente 2e - 2g können sich beispielsweise um eine Anzahl von Kettengliedern 14 in ihrer Länge voneinander unterscheiden. Zum Verbinden zweier Kettensegmente sind aus dem Stand der Technik verschiedenste Einrichtungen bekannt.

Beispielsweise kann zum Verbinden von zwei der Kettensegmente 2e, 2f, 2g an jedem der Kettensegmente eine Vielzahl von Verbindungsvorsprüngen 2j an einem ersten Segmentende 2m ausgebildet sein, die hinsichtlich ihrer Breite und ihrer Abstände untereinander an eine Vielzahl von Verbindungsvorsprüngen 2k angepasst sind, die sich an einem entgegengesetzten Ende 2n des Kettensegments befinden. Quer zur Laufrichtung sind die Verbindungsvorsprünge 2j und 2k durchbohrt. Dadurch lässt sich ein Verbindungsbolzen 19 durch alle Verbindungsvorsprünge 2j und 2k hindurchstecken, wenn z.B. die Verbindungsvorsprünge 2j des Kettensegments 2e zwischen die Verbindungsvorsprünge 2k des Kettensegments 2f eingreifend angeordnet sind.

### Bezugszeichenliste:

- 1: Raupenkette
- 1a: Innenseite
- 1b: Außenseite
- 1c: Stirnseite
- 1d: Stirnseite
- 2: Traktionskette
- 2a: Innenseite
- 2b: Außenseite
- 2e: Kettensegment
- 2f: Kettensegment
- 2g: Kettensegment
- 2j: Verbindungsvorsprung
- 2k: Verbindungsvorsprung
- 2m: Segmentende
- 2n: Segmentende
- 3: Seitenkette
- 4: Seitenkette
- 5: Seitenkette
- 6: Raupensteg
- 6a: Profilschiene
- 6b: Hohlprofil
- 6c: Hohlprofil
- 7: Raupensteg
- 8: Kettengurt
- 9: Kettengurt
- 10: Kettensteg
- 11: Zwischenraum
- 12: Erhebung
- 13: Spurbereich
- 14: Ausschnitt
- 15: Stegkern
- 15a: Oberflächenabschnitt
- 15b: Mittelabschnitt
- 15c: Schenkelabschnitt
- 15d: Schenkelabschnitt
- 15e: Brückenabschnitt
- 15f: Endkante
- 15g: Endkante
- 15h: Stützabschnitt
- 15j: Vorsprung
- 15k: Bohrung
- 15m: Strukturierung
- 15n: Profilabschnitt
- 15p: Profilabschnitt
- 16: Stahlseil
- 18: Aufnahmekern
- 19: Verbindungsbolzen

## Patentansprüche

1. Traktionskette (2) für eine Raupenkette (1) eines Kettenfahrzeugs, insbesondere eines Pistenfahrzeugs und/oder eines Loipenpräparationsfahrzeugs, mit Eingriffen (11) für ein Antriebsrad, mit Spurführungselementen (12), die zur Führung eines Fahrwerks des Kettenfahrzeugs in einer in Laufrichtung der Traktionskette (2) verlaufenden Spur (13) an einer Innenseite (2a) der Traktionskette (2) vorgesehen sind, mit einer Vielzahl von Anbringeinrichtungen (15, 15c, 15d, 15e), von denen jede zur Anbringung eines Raupenstegs (6, 7) an einer Außenseite (2b) der Traktionskette (2) und quer zur Laufrichtung der Traktionskette (2) vorgesehen sind, wobei die Traktionskette (2) zur Verwendung mit einer parallel mitlaufenden Seitenkette (3, 4, 5) vorgesehen ist,
wobei des Weiteren die Traktionskette (2) teilweise aus einem elastischen, insbesondere elastomeren Grundmaterial geformt ist, in das wenigstens ein Zugmittel (16) in eine Laufrichtung der Traktionskette (2) verlaufend eingebettet ist,
**dadurch gekennzeichnet,**
**dass** das Zugmittel (16) innerhalb eines Bereichs des elastischen Grundmaterials eingebettet ist, in dessen Umgebung das Grundmaterial zwischen der Innenseite (2a) und der Außenseite (2b) der Traktionskette (2) eine Dicke von wenigstens zehn Millimeter aufweist,
**dass** die Anbringeinrichtungen (15, 15c, 15d, 15e) im elastischen Grundmaterial der Traktionskette (2) eingebettet sind,
und **dass** jede Anbringeinrichtung (15, 15c, 15d, 15e) ein quer zur Laufrichtung verlaufendes, im Querschnitt hintergreifendes oder U-förmig nach außen offenes, durchgehendes Aufnahmeprofil (15c, 15d, 15e) aufweist, in das jeweils einer der Raupenstege (6, 7) für eine Anbringung quer zur Laufrichtung der Traktionskette (2), insbesondere seitlich einschiebbar ist, wobei der Raupensteg (6, 7) an der Anbringeinrichtung (15, 15c, 15d, 15e) in wenigstens einer eingeschobenen Position fixierbar ist.

2. Traktionskette (2) nach Anspruch 1, **dadurch gekennzeichnet, dass** das elastische Grundmaterial in Laufrichtung als durchgehendes Band (8, 9) ausgebildet ist.

3. Traktionskette (2) nach einem der vorgenannten Ansprüche, **dadurch gekennzeichnet, dass** die Spurführungselemente (12) im elastischen Grundmaterial eingebettet sind.

4. Traktionskette (2) nach einem der vorgenannten Ansprüche, **dadurch gekennzeichnet, dass** die Spurführungselemente (12) im elastischen Grundmaterial an der Innenseite (2a) der Traktionskette (2) angeformt sind.

5. Traktionskette (2) nach einem der vorgenannten Ansprüche, **dadurch gekennzeichnet, dass** die Spurführungselemente (12) mit einem vom elastischen Grundmaterial verschiedenen Material an der Innenseite (2a) der Traktionskette (2) angegossen sind.

6. Traktionskette (2) nach einem der vorgenannten Ansprüche, **dadurch gekennzeichnet, dass** die Anbringeinrichtung (15, 15c, 15d, 15e) ein in die Traktionskette (2) eingebettetes Schienenelement (15c, 15d, 15e) umfasst, dessen Material härter als das elastische Grundmaterial ist.

7. Traktionskette (2) nach einem der vorgenannten Ansprüche, **dadurch gekennzeichnet, dass** mehrere innere Flächenabschnitte der Anbringeinrichtung (15, 15c, 15d, 15e) einen Querschnitt bilden, durch den eine Anbringung eines der Raupenstege (6, 7) nur durch ein seitliches Einschieben eines Raupensteges (6, 7) möglich ist.

8. Traktionskette (2) nach einem der vorgenannten Ansprüche, **dadurch gekennzeichnet, dass** die Anbringeinrichtung (15, 15c, 15d, 15e) in einer Breite der Traktionskette (2) quer zur Laufrichtung über einen Teilabschnitt der Traktionskette (2) erstreckt ist.

9. Traktionskette (2) nach einem der vorgenannten Ansprüche, **dadurch gekennzeichnet, dass** die Anbringeinrichtung (15, 15c, 15d, 15e) zur Anbringung eines stiftförmigen Fixierelements parallel zur Laufrichtung ausgebildet ist, mit denen an der Anbringeinrichtung (15, 15c, 15d, 15e) ein eingeschobener Raupensteg (6, 7) gegen eine Verschiebung quer zur Laufrichtung fixierbar ist.

10. Traktionskette (2) nach einem der vorgenannten Ansprüche, **dadurch gekennzeichnet, dass** die Anbringeinrichtung (15, 15c, 15d, 15e) mehrere Anbringpositionen für das stiftförmige Fixierelement aufweist.

11. Traktionskette (2) nach einem der vorgenannten Ansprüche, **dadurch gekennzeichnet, dass** an der Traktionskette (2) in Laufrichtung auf jeden der Eingriffe (11) folgend ein Kettensteg (10) ausgebildet ist, der eine der Anbringeinrichtungen (15, 15c, 15d, 15e) aufweist.

12. Traktionskette (2) nach einem der vorgenannten Ansprüche, **dadurch gekennzeichnet, dass** die Raupenstege (6, 7) als Trittelemente, insbesondere Bodeneingriffselemente der Traktionskette (2) ausgebildet sind.

13. Traktionskette (2) nach einem der vorgenannten Ansprüche, **dadurch gekennzeichnet, dass** die Eingriffe (11) an der Traktionskette (2) als Materialdurchbrüche ausgebildet sind.

14. Traktionskette (2) nach einem der vorgenannten Ansprüche, **dadurch gekennzeichnet, dass** mehrere Zugmittel (16) in die Traktionskette (2) eingebettet sind.

15. Traktionskette (2) nach einem der vorgenannten Ansprüche, **dadurch gekennzeichnet, dass** die Zugmittel (16) neben einem Spurabschnitt (13) der Traktionskette (2) angeordnet sind.

16. Traktionskette (2) nach einem der vorgenannten Ansprüche, **dadurch gekennzeichnet, dass** die Anbringeinrichtungen (15, 15c, 15d, 15e) jeweils einen Stützabschnitt (15h) aufweisen, der zwischen den Zugmitteln und der Oberfläche der Traktionskette an deren Innenseite angeordnet ist.

17. Traktionskette (2) nach einem der vorgenannten Ansprüche, **dadurch gekennzeichnet, dass** an der Anbringeinrichtung (15, 15c, 15d, 15e) ein Stützabschnitt (15h) seitlich hervorstehend ausgebildet ist, der zwischen der Innenseite (2a) der Traktionskette (2) und dem Zugmittel (16) im elastischen Grundmaterial eingebettet ist.

18. Traktionskette (2) nach einem der vorgenannten Ansprüche, **dadurch gekennzeichnet, dass** am Stützabschnitt (15h) Außenkanten (15j) abgerundet sind, die an einer den Zugmitteln (16) zugewandten Seite (151) liegen und die quer zur Laufrichtung verlaufen.

19. Traktionskette (2) nach einem der vorgenannten Ansprüche, **dadurch gekennzeichnet, dass** ein Stützabschnitt (15h) an einer den Zugmitteln zugewandten Seite (151) konvex vorgewölbt ist.

20. Traktionskette (2) nach einem der vorgenannten Ansprüche, **dadurch gekennzeichnet, dass** die Traktionskette (2) entlang der Laufrichtung aus mehreren miteinander verbundenen Traktionskettensegmenten (2e, 2f, 2g) zusammengesetzt ist.

21. Bausatz zum Aufbau einer Raupenkette für ein Pistenfahrzeug, der eine Traktionskette (2) nach einem der vorgenannten Ansprüche umfasst.

22. Bausatz nach Anspruch 21, **dadurch gekennzeichnet, dass** der Bausatz mehrere Traktionskettensegmente umfasst, die untereinander unterschiedliche Längen bezüglich der Laufrichtung aufweisen.

23. Bausatz nach einem der Ansprüche 21 oder 22, **dadurch gekennzeichnet, dass** der Bausatz verschiedene Seitenkettensegmente umfasst, deren unterschiedliche Längen in Laufrichtung an unterschiedliche Längen von Traktionskettensegmenten angepasst ist.

24. Bausatz nach einem der Ansprüche 21 bis 23, **dadurch gekennzeichnet, dass** der Bausatz eine Seitenkette umfasst, die für eine Mitbewegung parallel zur Traktionskette (2) vorgesehen ist, wobei die Seitenkette (3, 4, 5) wenigstens ein U-förmiges Aufnahmeprofil aufweist, in das ein Raupensteg (6, 7) quer zur Laufrichtung der Seitenkette (3, 4, 5) einschiebbar ist.

25. Bausatz nach einem der Ansprüche 21 bis 24, **dadurch gekennzeichnet, dass** jedes Teil des Bausatzes in einer solchen Vielzahl enthalten ist, dass sich jeweils eine Raupenkette (1) für eine linke und eine rechte Seite eines Pistenfahrzeugs aufbauen lässt.

## Claims

1. Traction chain (2) for a caterpillar chain (1) of a tracked vehicle, in particular a piste vehicle and/or a cross-country ski trail preparation vehicle, having engagement members (11) for a driving wheel, having track guiding elements (12), which are provided for guiding a running gear of the tracked vehicle in a track (13), on an inner side (2a) of the traction chain (2), running in a running direction of the traction chain (2), having a multiplicity of attachment devices (15, 15c, 15d, 15e), each of which is provided for attaching a caterpillar cleat (6, 7) to an outer side (2b) of the traction chain (2) and transversely in relation to the running direction of the traction chain (2), the traction chain (2) being provided for use with a lateral chain (3, 4, 5) running parallel therewith, the traction chain (2) furthermore being formed partially from an elastic, in particular elastomeric, base material, into which at least one traction member (16) is embedded, extending in a running direction of the traction chain (2),
**characterised in that**
the traction member (16) is embedded within a region of the elastic base material around which the base material has a thickness of at least ten millimetres between the inner side (2a) and the outer side (2b) of the traction chain (2),
and **in that** the attachment devices (15, 15c, 15d, 15e) are embedded in the elastic base material of the traction chain (2),
and each attachment device (15, 15c, 15d, 15e) has a continuous receiving profile (15c, 15d, 15e), which runs transversely in relation to the running direction and which in cross section engages behind or is outwardly open in a U shape, into each of which one of the caterpillar cleats (6, 7) can be inserted, in particular laterally, for the purpose of attaching transversely in relation to the running direction of the traction chain (2), the caterpillar cleat (6, 7) being fixable to the attachment device (15, 15c, 15d, 15e) in at least one inserted position.

2. Traction chain (2) according to claim 1, **characterised in that** the elastic base material is a continuous band (8, 9) in the running direction.

3. Traction chain (2) according to any one of the preceding claims, **characterised in that** the track guide elements (12) are embedded in the elastic base material.

4. Traction chain (2) according to any one of the preceding claims, **characterised in that** the track guide elements (12) are formed on the inner side (2a) of the traction chain (2), in the elastic base material.

5. Traction chain (2) according to any one of the preceding claims, **characterised in that** the track guide elements (12) are cast on the inner side (2a) of the traction chain (2), by a material that differs from the elastic base material.

6. Traction chain (2) according to any one of the preceding claims, **characterised in that** the attachment device (15, 15c, 15d, 15e) comprise a rail element (15c, 15d, 15e), which is embedded in the traction chain (2), the material of which is harder than the elastic base material.

7. Traction chain (2) according to any one of the preceding claims, **characterised in that** a plurality of inner surface portions of the attachment device (15, 15c, 15d, 15e) form a cross section, by which the attachment of one of the caterpillar cleats (6, 7) is possible only by lateral insertion of a caterpillar cleat (6, 7).

8. Traction chain (2) according to any one of the preceding claims, **characterised in that** the attachment device (15, 15c, 15d, 15e) extends, in a width of the traction chain (2), transversely in relation to the running direction, over a portion of the traction chain (2).

9. Traction chain (2) according to any one of the preceding claims, **characterised in that** the attachment device (15, 15c, 15d, 15e), for the purpose of attaching a pin-shaped fixing element, is arranged parallel to the running direction, by which, on the attachment device (15, 15c, 15d, 15e), an inserted caterpillar cleat (6, 7) can be fixed against being displaced transversely to the running direction.

10. Traction chain (2) according to any one of the preceding claims, **characterised in that** the attachment devices (15, 15c, 15d, 15e) have a plurality of attachment positions for the pin-shaped fixing element.

11. Traction chain (2) according to any one of the preceding claims, **characterised in that** a chain web (10), having one of the attachment devices (15, 15c, 15d, 15e), is provided on the traction chain (2), following each of the engagement members (11), in the running direction.

12. Traction chain (2) according to any one of the preceding claims, **characterised in that** the caterpillar cleats (6, 7) are tread elements, in particular ground engagement elements of the traction chain (2).

13. Traction chain (2) according to any one of the preceding claims, **characterised in that** the engagement members (11) on the traction chain (2) are formed as openings in the material.

14. Traction chain (2) according to any one of the preceding claims, **characterised in that** a plurality of traction members (16) are embedded in the traction chain (2).

15. Traction chain (2) according to any one of the preceding claims, **characterised in that** the traction members (16) are disposed next to a track portion (13) of the traction chain (2).

16. Traction chain (2) according to any one of the preceding claims, **characterised in that** the attachment devices (15, 15c, 15d, 15e) each have a support portion (15h), which is disposed between the traction members and the surface of the traction chain, on the inside thereof.

17. Traction chain (2) according to any one of the preceding claims, **characterised in that** a support portion (15h) is provided on the attachment device (15, 15c, 15d, 15e) so as to project laterally and is embedded in the elastic base material, between the inner side (2a) of the traction chain (2) and the traction member (16).

18. Traction chain (2) according to any one of the preceding claims, **characterised in that** on the support portion (15h) outer edges (15j), which are located on a side (151) facing toward the traction members (16) and extend transversely in relation to the running direction, are rounded off.

19. Traction chain (2) according to any one of the preceding claims, **characterised in that** a support portion (15h) is domed convexly on a side (151) facing toward the traction members.

20. Traction chain (2) according to any one of the preceding claims, **characterised in that** the traction chain (2) is composed of a plurality of traction chain segments (2e, 2f, 2g) connected to each other along the running direction.

21. Kit for constructing a caterpillar chain for a piste vehicle, comprising a traction chain (2) according to any one of the preceding claims.

22. Kit according to claim 21, **characterised in that** the kit comprises a plurality of traction chain segments, which differ from one another in length in respect of the running direction.

23. Kit according to any one of claims 21 or 22, **characterised in that** the kit comprises various lateral chain segments whose differing lengths in the running direction are matched to differing lengths of traction chain segments.

24. Kit according to any one of claims 21 to 23, **characterised in that** the kit comprises a lateral chain, which is provided to be moved concomitantly and parallel with the traction chain (2), the lateral chain (3, 4, 5) having at least one U-shaped receiving profile, into which a caterpillar cleat (6, 7) can be inserted, transversely in relation to the running direction of the lateral chain (3, 4, 5).

25. Kit according to any one of claims 21 to 24, **characterised in that** each part of the kit is included in such multiplicity that a caterpillar chain (1) for a left and a right side of a piste vehicle can be constructed respectively.

## Revendications

1. Chaîne de traction (2) pour une chenille (1) d'un véhicule à chenilles, en particulier pour une dameuse et/ou un véhicule de préparation de piste de ski de fond, avec des éléments d'engagement (11) pour une roue d'entraînement, avec des éléments de guidage de chemin de roulement (12) qui sont prévus sur une face intérieure (2a) de la chaîne de traction (2) pour guider un train de roulement du véhicule à chenilles dans un chemin de roulement (13) s'étendant dans la direction de déplacement de la chaîne de traction (2), avec une pluralité d'éléments de mise en place (15, 15c, 15d, 15e), chacun d'entre eux étant prévu transversalement à la direction de déplacement de la chaîne de traction (2) pour mettre en place un crampon de chenille (6, 7) sur une face extérieure (2b) de la chaîne de traction (2), la chaîne de traction (2) étant prévue pour être utilisée avec une chaîne latérale (3, 4, 5) qui se déplace parallèlement en même temps qu'elle, la chaîne de traction (2) étant en outre formée partiellement dans un matériau de base élastique, notamment en élastomère, dans lequel est inséré au moins un moyen de traction (16) s'étendant dans une direction de déplacement de la chaîne de traction (2), **caractérisée en ce que** le moyen de traction (16) est inséré dans une zone du matériau de base élastique au voisinage de laquelle le matériau de base présente une épaisseur d'au moins dix millimètres entre la face intérieure (2a) et la face extérieure (2b) de la chaîne de traction (2), **en ce que** les éléments de mise en place (15, 15c, 15d, 15e) sont insérés dans le matériau de base élastique de la chaîne de traction (2), et **en ce que** chaque élément de mise en place (15, 15c, 15d, 15e) présente un profil de réception continu qui s'étend transversalement à la direction de déplacement et qui, en coupe transversale, s'engage par l'arrière ou est en forme de U ouvert vers l'extérieur, et dans chacun desquels peut être introduit, notamment latéralement, l'un des crampons de chenille (6, 7), en vue d'une mise en place transversalement à la direction de déplacement de la chaîne de traction (2), le crampon de chenille (6, 7) pouvant être fixé dans au moins une position introduite sur l'élément de mise en place (15, 15c, 15d, 15e).

2. Chaîne de traction (2) selon la revendication 1, **caractérisée en ce que** le matériau de base élastique est conçu dans la direction de déplacement sous la forme d'une bande continue (8, 9).

3. Chaîne de traction (2) selon l'une des revendications précédentes, **caractérisée en ce que** les éléments de guidage de chemin de roulement (12) sont insérés dans le matériau de base élastique.

4. Chaîne de traction selon l'une des revendications précédentes, **caractérisée en ce que** les éléments de guidage de chemin de roulement (12) sont formés dans le matériau de base élastique sur la face intérieure (2a) de la chaîne de traction (2).

5. Chaîne de traction (2) selon l'une des revendications précédentes, **caractérisée en ce que** les éléments de guidage de chemin de roulement (12) sont coulés sur la face intérieure (2a) de la chaîne de traction (2) avec un matériau différent du matériau de base élastique.

6. Chaîne de traction (2) selon l'une des revendications précédentes, **caractérisée en ce que** l'élément de mise en place (15, 15c, 15d, 15e) comprend un élément de rail (15c, 15d, 15e) inséré dans la chaîne de traction (2) et dont le matériau est plus dur que le matériau de base élastique.

7. Chaîne de traction (2) selon l'une des revendications précédentes, **caractérisée en ce que** plusieurs sections de surface intérieures de l'élément de mise en place (15, 15c, 15d, 15e) forment une section transversale avec laquelle la mise en place de l'un des crampons de chenille (6, 7) n'est possible que par une introduction latérale d'un crampon de chenille (6, 7).

8. Chaîne de traction (2) selon l'une des revendications précédentes, **caractérisée en ce que** l'élément de mise en place (15, 15c, 15d, 15e) s'étend sur un tronçon de la chaîne de traction (2) dans une largeur de la chaîne de traction (2) transversalement à la direction de déplacement.

9. Chaîne de traction (2) selon l'une des revendications précédentes, **caractérisée en ce que** l'élément de mise en place (15, 15c, 15d, 15e) est conçu pour la mise en place parallèlement à la direction de déplacement d'un élément de fixation en forme de broche au moyen duquel un crampon de chenille (6, 7) introduit peut être fixé sur l'élément de mise en place (15, 15c, 15d, 15e) en étant empêché de se déplacer transversalement à la direction de déplacement.

10. Chaîne de traction (2) selon l'une des revendications précédentes, **caractérisée en ce que** l'élément de mise en place (15, 15c, 15d, 15e) présente plusieurs positions de mise en place pour l'élément de fixation en forme de broche.

11. Chaîne de traction (2) selon l'une des revendications précédentes, **caractérisée en ce qu'**une entretoise de chaîne (10) est réalisée sur la chaîne de traction (2) à la suite, dans la direction de déplacement, de chacun des éléments d'engagement (11), laquelle est munie de l'un des éléments de mise en place (15, 15c, 15d, 15e).

12. Chaîne de traction (2) selon l'une des revendications précédentes, **caractérisée en ce que** les crampons de chenille (6, 7) sont conçus sous la forme d'un pain de structure, en particulier sous la forme d'éléments d'engagement au sol de la chaîne de traction.

13. Chaîne de traction (2) selon l'une des revendications précédentes, **caractérisée en ce que** les éléments d'engagement (11) sur la chaîne de traction (2) sont réalisés sous la forme d'ouvertures dans le matériau.

14. Chaîne de traction (2) selon l'une des revendications précédentes, **caractérisée en ce que** plusieurs moyens de traction (16) sont insérés dans la chaîne de traction (2).

15. Chaîne de traction (2) selon l'une des revendications précédentes, **caractérisée en ce que** les moyens de traction (16) sont disposés à côté d'un chemin de roulement (13) de la chaîne de traction (2).

16. Chaîne de traction (2) selon l'une des revendications précédentes, **caractérisée en ce que** les éléments de mise en place (15, 15c, 15d, 15e) sont munis chacun d'une section support (15h) qui est disposée entre les éléments de traction et la surface de la chaîne de traction, sur la face intérieure de celle-ci.

17. Chaîne de traction (2) selon l'une des revendications précédentes, **caractérisée en ce qu'**une section support (15h) est formée saillant latéralement sur l'élément de mise en place (15, 15c, 15d, 15e) et est insérée dans le matériau de base élastique entre la face intérieure (2a) de la chaîne de traction (2) et le moyen de traction (16).

18. Chaîne de traction (2) selon l'une des revendications précédentes, **caractérisée en ce que** des arêtes extérieures (15j) sur la section support (15h) sont arrondies, lesquelles sont situées sur un côté (151) dirigé vers les moyens de traction (16) et s'étendent transversalement à la direction de déplacement.

19. Chaîne de traction (2) selon l'une des revendications précédentes, **caractérisée en ce qu'**une section support (15h) est bombée de manière convexe sur un côté (15l) dirigé vers les moyens de traction.

20. Chaîne de traction (2) selon l'une des revendications précédentes, **caractérisée en ce que** la chaîne de traction (2) se compose, le long de la direction de déplacement, de plusieurs segments de chaîne de traction (2e, 2f, 2g) reliés entre eux.

21. Kit pour la construction d'une chenille pour une dameuse, comprenant une chaîne de traction (2) selon l'une des revendications précédentes.

22. Kit selon la revendication 21, **caractérisé en ce que** le kit comprend plusieurs segments de chaîne de traction présentant des longueurs, considérées dans la direction de déplacement, différentes les unes des autres.

23. Kit selon la revendication 21 ou 22, **caractérisé en ce que** le kit comprend plusieurs segments de chaîne latérale dont les longueurs différentes, dans la direction de déplacement, sont adaptées aux différentes longueurs des segments de chaîne de traction.

24. Kit selon l'une des revendications 21 à 23, **caractérisé en ce que** le kit comprend une chaîne latérale qui est prévue pour être déplacée en même temps et parallèlement à la chaîne de traction (2), la chaîne latérale (3, 4, 5) étant munie d'au moins un profil de réception en forme de U dans lequel un crampon de chenille (6, 7) peut être introduit transversalement à la direction de déplacement de la chaîne latérale (3, 4, 5).

25. Kit selon l'une des revendications 21 à 24, **caractérisé en ce que** chaque partie du kit est présente en un nombre tel, qu'il est possible de construire une chaîne de chenille (1) pour un côté gauche et pour un côté droit d'une dameuse.
